Europäisches Patentamt

European Patent Office

Office européen des brevets

(11) Veröffentlichungsnummer: **0 278 459**
**A2**

## (12) EUROPÄISCHE PATENTANMELDUNG

(21) Anmeldenummer: **88101808.9**

(22) Anmeldetag: **08.02.88**

(51) Int. Cl.⁴: **C04B 41/83**

(30) Priorität: **10.02.87 DE 3704095**

(43) Veröffentlichungstag der Anmeldung:
**17.08.88 Patentblatt 88/33**

(84) Benannte Vertragsstaaten:
**AT BE CH DE ES FR GB IT LI LU NL SE**

(71) Anmelder: **Buchtal Gesellschaft mit beschränkter Haftung**
**Buchtalweg**
**D-8472 Schwarzenfeld(Opf.)(DE)**

(72) Erfinder: **Bard, Martin**
**26 Seminargasse,**
**D-8450 Amberg(DE)**

(74) Vertreter: **Bockhorni, Josef, Dipl.-Ing. et al**
**Plinganserstrasse 18a Postfach 70 02 09**
**D-8000 München 70(DE)**

(54) Unglasierter keramischer plattenförmiger Körper.

(57) Bei einem unglasierten keramischen plattenförmigen Körper, der an ihn gelangende elektrische Spannungen in eine elektrisch leitende Unterkonstruktion abzuleiten vermag, besteht der Körper aus einem Scherben mit offener Porosität und sind die Poren mit einem Emulgator gefüllt, der sich hinsichtlich seiner elektrischen Leitfähigkeit ähnlich verhält wie ein Metall.

# Unglasierter keramischer plattenförmiger Körper.

Die Erfindung betrifft einen unglasierten plattenförmigen keramischen Körper, der an ihn gelangende elektrische Spannung in eine elektrisch leitfähige Unterkonstruktion abzuleiten vermag.

Plattenförmige, elektrisch leitende keramische Körper lassen sich zu mehreren zu einem Belag für Wand-und Fußbodenbekleidungen zusammenstellen und stehen dann mit einer unter dem Belag vorzusehenden elektrisch ableitenden Unterkonstruktion elektrisch leitend in Verbindung. Solche Wand-und oder Fußbodenkonstruktionen eignen sich beispielsweise für Operationssäle, Laboratorien, feuergefährdete Industrieräume, wie Lackiereien, Lackfabriken, Lagerhallen für leicht entzündbare Chemikalien, wie Lösungsmittel od. dgl., usw.. In neuerer Zeit besteht ein Bedarf an solchen keramischen Platten auch für Bereiche, in denen eine spürbare elektrisch Entladung bei Personen vermieden werden soll, wie beispielsweise in Büroräumen, in denen Computer und ähnliche elektrische und elektronische Geräte aufgestellt sind oder in denen elektronische Bauteile, wie Chips, hergestellt werden. An Fußbodenbeläge in Operationssälen wird die Forderung gestellt, daß eine ständige Ableitung von statischer Elektrizität gewährleistet ist, zugleich aber verhindert wird, daß ein Abfluß von Strom in gefährlicher Stärke beim Berühren mangelhaft isolierter, stromführender Teile durch den menschlichen Körper erfolgt. Auch hier finden solche plattenförmige elektrisch leitende keramische Elemente als Bestandteile von Bodenbelägen Verwendung. Soll die gestellte For derung erfüllt sein, dann müssen solche Beläge einen elektrischen Widerstand in der Größenordnung von $10^4$ bis $10^6$ Ohm aufweisen.

Solche aus keramischen plattenförmigen Elementen erstellte Beläge haben gegenüber PVC- und anderen Kunststoffbelägen Vorteile, weil jene eine nur unzureichende Beständigkeit gegen organische Lösungsmittel und andere zur Reinigung und Desinfektion verwendete Chemikalien aufweisen . Außerdem müssen für solche Bodenbeläge zu ihrer Verbindung mit der elektrisch ableitenden Unterkonstruktion elektrisch leitende organische Kleber verwendet werden, deren Leitfähigkeitswerte nicht über längere Zeiträume hinweg stabil sind.

Bei Teppichbelägen aus Kunststofffasern kommt es darüber hinaus zu der bekannten Selbstaufladung mit statischer Elektrizität, die man durch Einweben oder sonstigen Einbau von elektrisch leitenden Fäden oder Drahtgeweben zu vermieden versucht, ein Vorgehen, das teuer ist und auch nicht zu befriedigenden Ergebnissen führt.

Zuerst hat man versucht, auf plattenförmigen keramischen Elementen zur Herstellung solcher ableitender Beläge auf der Sichtseite der Platten einen elektrisch leitenden Überzug vorzusehen. In "Baukeramik" 8/84, Seite 96 ist eine grau-blaue Leitfliese im Format 15 x 15 cm beschrieben, die aus keramischem Material besteht und einen über die Seitenkanten hinweggezogenen elektrisch leitenden Überzug aufweist, so daß die Ableitung von Elektrizität nur über das an die Kanten solcher Platten anstoßende Fugenmaterial erfolgen kann, das dann aus elektrisch leitend gemachten Grundstoffen bestehen muß. Da solches Fugenmaterial dazu neigt nachzuschwinden, besteht die Gefahr, daß der elektrische Kontakt mit den Fliesenkanten wenigstens teilweise verloren geht. Außerdem wäscht sich solches Fugenmaterial bei häufiger Reinigung rasch aus, was ebenfalls zur Verringerung der Kontaktflächen führen kann.

Damit ändert sich nicht nur der Ableitwiderstand, sondern es leidet auch die mechanische Belastbarkeit des Plattenbelages. Außerdem entstehen beim Schwinden bzw. beim Abgetragenwerden des Fugenmaterials zwischen den Plattenkanten und dem Fugenmaterial kleinste Zwischenräume, die sich mit Keimen zusetzen können, was z. B. für Operationsräume absolut untragbar ist. Schließlich sind die bekannten Platten vergleichsweise kleinformatig, so daß sie der in der Prüfnorm verlangten Standortübergangswiderstandsnorm (VDE-Bestimmung 0100/5.73 § 24) nicht genügen.

Eine Verbesserung beschreibt die europäische Patentanmeldung 86 109 754.1, die auf die Anmelderin zurückgeht. Aus ihr ist ein plattenartiges keramisches Element bekannt, das auf einer Sichtseite mit einer elektrisch leitenden Oberflächenglasur versehen ist, die bei Verlegung des plattenartigen keramischen Elementes mit mehreren solcher Elemente zu einem Belag für Wand-oder Fußbodenbekleidungen mit einer unter dem Belag vorzusehenden, elektrisch ableitenden Unterkonstruktion leitend in Verbindung steht. Die Verlegung solcher Platten z. B. zu einem Fußbodenbelag ist somit völlig unabhängig vom Fugenmaterial, so daß ein Fugenmaterial gewählt werden kann, das hinsichtlich seiner Abriebfestigkeit, seiner Elastizität, insbesondere Dauerelastizität, und seiner hygienischen Eigenschaften allen an ein solches Material zu stellenden Forderungen in vollem Umfang gerecht wird und ermöglicht, daß wenigstens ein Teil der der Sichtseite abgewendeten Seite des plattenartigen keramischen Elementes mit einem elektrisch gut leitendem Material beschichtet werden kann, das mit der Oberflächenglasur elektrisch leitend in Verbindung steht.

Um von der Ableitung über das Fugenmaterial unabhängig zu werden, wurde auch bereits zu Fußbodenfliesen übergegangen, die durch Brennen von geformten Mischungen aus Steinzeug-oder Töpferton und Eisenoxid in einer beim Brennen von Bodenfliesen üblichen Atmosphäre hergestellt sind. Die DE-B-17 71 361 beschreibt ein Verfahren zur Herstellung solcher elektrisch halbleitender keramischer Bodenfliesen. Allerdings erhält man durch die Beimengung von Eisenoxid zum keramischen Material dunkel gefärbte unglasierte keramische Oberflächen.

Nach der DE-B-12 78 321 werden zur Herstellung elektrisch halbleitender keramischer Bodenfliesen Mischungen verwendet, die durch Zugabe von weiteren Oxiden, wie $ZnO$, $CuO$, $CoO$, $PbO$, $Sb_2O_3$, $SnO_2$, $BaO$, $CaO$, $MgO$ u. a. einzeln oder gemischt und in Mengen von 0,5 bis 7 %, bezogen auf den gebrannten Scherben, ein weiteres Absinken des spezifischen Widerstandes bewirken sollen und Veränderungen der Brennfarbe von rot bis schwarz erlauben. Diese Fliesen werden aus dem Ausgangsmaterial gepreßt und daher sind sie in ihren Größenabmessungen auf z. B. 5 x 5 cm beschränkt, wie sich aus einem Hinweis aus der DE-B-12 13 336 ergibt.

Aus dieser DE-B-12 13 336 entnimmt der Fachmann ferner ein Verfahren zur Herstellung elektrisch halbleitender Fliesen, gemäß dem gekörnte keramische Bodenfliesenmasse herkömmlicher Art im Gewichtsverhältnis 4:1 bis 12:1 mit einer $Fe_2O_3$ und andere Metalloxide, vorzugsweise $ZnO$ enthaltenden keramischen Masse, die im gebrannten Zustand einen elektrisch leitenden Scherben ergibt, gemischt, zu Fliesen verpreßt und bei 1200 bis 1250°C im normalen Industrieofen bei oxidierender Atmosphäre gebrannt wird.

Auch bei diesem Verfahren werden also die Platten aus trokkener Ausgangsmasse gepreßt, was das endgültige Plattenformat erheblich einschränkt.

Wegen der mit der Körperleitung unbedingt verbundenen Forderung nach einer Wasseraufnahme < 1 % zur Vermeidung einer schwankenden Ableitfähigkeit aufgrund unterschiedlichen Feuchtigkeitsgehalt der Fliesen, zurückzuführen auf eine bestimmte Porosität und unterschiedlichen Wassergehalt in diesen aufgrund wechselnden Feuchteangebotes z. B. über die Bodenreinigung, kommen bei den vorgenannten Lösungsvorschlägen die mit einem so hohen Eisenoxidanteil verbundenen Schwindungs-und Rißprobleme bei der Herstellung besonders stark zum Tragen. Eine Reduzierung des Eisenoxidanteiles kann wegen des dann sofort eintretenden Effektes einer entsprechenden Erhöhung des elektrischen Widerstandes nicht vorgenommen werden.

Der Versuch, andere metallische, elektrische Leiter in die keramische Masse einzubinden, weil mit ihnen andere Farbeffekte zu erwarten wären, - scheitert an dem zu hohen Anteil der leitenden Teile am Gesamtvolumen, weil für die Ableitung von Elektrizität durch den keramischen Körper der Kontakt der einzelnen Teilchen untereinander eine unabdingbare Voraussetzung darstellt und die üblichen elektrisch leitenden Metallpulver oder - granulate kugelförmig ausgebildet sind. Mit solchen Leitern, die eine schlechte elektrische Leitfähigkeit aufweisen, verschärft sich das Mengenproblem zur Erzielung einer genügend großen Leitfähigkeit. Bei solchen, die eine gute elektrische Leitfähigkeit aufweisen, ergibt sich das gleiche Problem bei der Erzielung einer Leitfähigkeit als solcher, da diese dann nicht mehr klein genug gehalten werden kann, um einen genügend kleinen Standortübergangswiderstand zu gewährleisten. Hinzu kommt bei solchen Lösungsversuchen das Unvermögen, Sinter-und Schwindungsverhalten solcher Massen technisch und kostenmäßig zu beherrschen.

Hier setzt die Erfindung ein, die sich die Aufgabe gestellt hat, einen unglasierten keramischen plattenförmigen Körper zu schaffen, der elektrische Spannungen unmittelbar in eine unter einen aus mehreren solcher Platten gebildeten Belag vorgesehene elektrisch ableitende Unterkonstruktion abzuleiten vermag, wobei der Widerstand eines solchen Belages zwischen ca. $10^4$ und $10^6$ Ohm beträgt, das äußere Erschei nungsbild von bisher in der Keramik üblichen unglasierten Körpern sich nicht unterscheidet, d. h. alle üblichen Farbnuancen umfaßt, und auch die übliche Formatgröße eines Vielfachen von 5 x 5 cm aufweist.

Dies wird erfindungsgemäß dadurch erzielt, daß der Körper aus einem Scherben mit offenen und zusammenhängenden Poren besteht und die Poren mit einem Emulgator gefüllt sind, der sich hinsichtlich seiner elektrischen Leitfähigkeit ähnlich verhält wie ein Metall. Solche Emulgatoren werden z. B. von der Firma Henkel unter der Warenbezeichnung NONAX 975 und NONAX 1166 vertrieben.

Die offene Porosität des Körpers sollte weniger als 10 Volumen-% betragen, wobei sich eine Porosität von 7 bis 8 % als besonders geeignet erwiesen hat.

Der Anteil an offenen Poren sollte gemäß einer besonders bevorzugten Ausführungsform der Erfindung zu wenigstens 75 % aus Poren mit einem Porendurchmesser = 0,75 um bestehen.

Solche Porengrößen und -verteilungen in keramischen Scherben lassen sich durch geeignete Auswahl der tonigen Rohstoffe und Flußmittel, ihrer mineralogischen Zusammensetzung und ihrer Feinheit bestimmen. Bei den verwendeten Emulgatoren kann es sich um Polyäthylenglykol handeln, das aufgrund seines Molekülaufbaus und seines Chemismus sich hinsichtlich der Leitfähigkeit ähnlich verhält wie ein Metall. Der Emulgator wird in alaklischem Medium in den Porenraum der Keramik eingebracht.

Bei einer nachfolgenden Temperaturbehandlung zwischen 100 und 130 C vernetzt diese Substanz in den Poren und bildet eine dauerhafte, wasserunlösliche, gegen chemische Reinigungsmittel resistente, jedoch dauerhygroskopische Porenfüllung. Wird ständig Luftfeuchtigkeit angeboten - in der Regel liegt die relative Luftfeuchtigkeit in klimatisier ten Räumen zwischen 30 und 70 % - so genügt dies, um in diesem vernetzten Kunststoff einen elektrischen Leitmechanismus in Gang zu setzen. Nunmehr hängt die Größe der Leitfähigkeit von der Menge an Molekülen/cm$^3$ des vernetzten Materials und damit von der Größenordnung des zur Verfügung gestellten Porenraumes, seiner statistischen Verteilung und der Porengröße ab, vorausgesetzt, daß diese Poren in einem System offen zusammenhängen.

Es hat sich als besonders vorteilhaft erwiesen, eine feinporige Keramik der beschriebenen Art zu verwenden, da hier einerseits Kapillarsaugkräfte für den Sättigungsvorgang der Poren am besten zum Tragen kommen und andererseits der angebotene Porenraum der Vernetzungsfähigkeit als Raumfüllung hervorragend entgegenkommt.

Man erhält mit dem erfindungsgemäßen Körper einen dauerhaft elektrisch ableitenden Körper, der die Vorzüge eines unglasierten keramischen Materials, wie Abriebfestigkeit, Rutschfestigkeit und ansprechende Farbvarianz, kombiniert mit einer exakt einzustellenden und dauerhaften elektrischen Leitfähigkeit aufweist.


Ausführungsbeispiel:

Es wird ein plattenförmiger keramischer Körper aus einem Gemenge aus

34 Gew.-%      kaolinitischer Ton
19 Gew.-%      kaolinitsch/illitischer Ton
27,5 Gew.-%      Kalium-Natrium-Mischfeldspat
19,5 Gew.-%      Quarz

hergestellt, wobei alle Anteile feiner als 63 μm sind. Ein aus diesen Ausgangsstoffen in üblicher Weise geformter, beispielsweise stranggepreßter und gebrannter plattenförmiger keramischer Körper weist nach dem Brennen eine offene Porosität von 7 bis 8 % auf, wobei 75 % dieser Poren einen Porendurchmesser von $\leq$ 0,5 um aufweisen. Ein solcher plattenförmiger keramischer Körper wird mit Polyäthylenglykol bis zur Sättigung getränkt, dann in der Wärme bei ca. 100 bis 130°C für eine Zeitdauer von 1 bis 2 Stunden getrocknet.

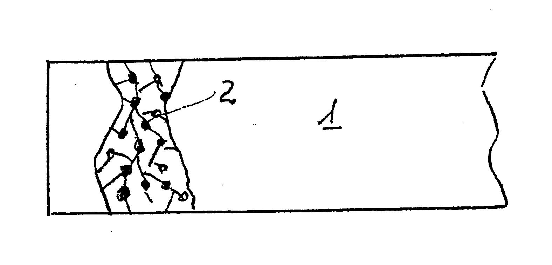

Die Zeichnung zeigt in vergrößerter Darstellung einen Teilschnitt, in dem in einer keramischen Platte 1 zusammenhängende offene Poren 2 erkennbar sind, die im Endzustand mit dem vernetzten Emulgator gefüllt sind. -


**Ansprüche**

1. Unglasierter keramischer plattenförmiger Körper, für Wand-und Bodenbeläge, der an ihn gelangende elektrische Spannungen in eine elektrisch leitende Unterkonstruktion abzuleiten vermag, dadurch **gekennzeichnet,** daß der Körper aus einem Scherben mit offenen zusammenhängenden Poren besteht, die mit einem Emulgator gefüllt sind, der sich hinsichtlich seiner elektrischen Leitfähigkeit ähnlich verhält wie ein Metall.

2. Keramischer Körper nach Anspruch 1, dadurch **gekennzeichnet,** daß die offene Porosität des Körpers kleiner 10 %, vorzugsweise 7 bis 8 % beträgt.

3. Keramischer Körper nach Anspruch 1 oder 2, dadurch **gekennzeichnet,** daß der Anteil an offenen Poren zu wenigstens annähernd 75 % aus Poren mit einem Porendurchmesser von $\leq$ 0,75 μm besteht.

4. Keramischer Körper nach einem der vorhergehenden Ansprüche, dadurch **gekennzeichnet,** daß als Emulgator ein vernetzbarer Kunststoff verwendet ist.

5. Keramischer Körper nach einem der vorhergehenden Ansprüche, dadurch **gekennzeichnet,** daß als Emulgator Polyäthylenglykol verwendet ist.

6. Keramischer Körper nach Anspruch 5, dadurch **gekennzeichnet,** daß der Emulgator in alkalischem Medium in die Poren des Körpers eingebracht und durch Temperaturbehandlung zwischen 100 und 130°C vernetzt ist.